# EUROPEAN PATENT SPECIFICATION

(11) **EP 3 716 452 B1**
(45) Date of publication and mention of the grant of the patent: **02.08.2023**
(21) Application number: 20165896.0
(22) Date of filing: 26.03.2020
(51) Int. Cl.: H02K 9/19, H02K 5/20, B29C 45/72

(54) **ACTUATOR FOR MOUNTING ON INJECTION MOLDING MACHINE, ACTUATOR COOLING DEVICE, INJECTION MOLDING MACHINE, AND METHOD FOR USING ACTUATOR COOLING DEVICE**
AKTUATOR ZUR MONTAGE AN EINER SPRITZGIESSMASCHINE, AKTUATORKÜHLVORRICHTUNG, SPRITZGIESSMASCHINE UND VERFAHREN ZUR VERWENDUNG EINER AKTUATORKÜHLVORRICHTUNG
ACTIONNEUR POUR MONTAGE SUR UNE MACHINE DE MOULAGE PAR INJECTION, DISPOSITIF DE REFROIDISSEMENT D'ACTIONNEUR, MACHINE DE MOULAGE PAR INJECTION ET PROCÉDÉ D'UTILISATION DU DISPOSITIF DE REFROIDISSEMENT D'ACTIONNEUR

(30) Priority: 28.03.2019 JP 2019064964; 31.01.2020 JP 2020015525
(43) Date of publication of application: 30.09.2020
(73) Proprietor: Sumitomo Heavy Industries, Ltd., Tokyo 141-6025 (JP)
(72) Inventor: TOYOSHIMA, Kento, Chiba-shi, Chiba, 263-0001, (JP); YAMASHITA, Koki, Chiba-shi, Chiba, 263-0001, (JP)
(74) Representative: Louis Pöhlau Lohrentz

(56) References cited:
- EP-A1- 2 182 309
- EP-A1- 2 804 291
- DE-A1-102008 003 724
- DE-A1-102014 102 632
- DE-A1-102015 221 115
- GB-A- 883 827
- JP-A- H09 308 183
- US-A1- 2002 135 245
- US-A1- 2003 048 031
- US-A1- 2005 151 431

## Description

### BACKGROUND OF THE INVENTION

### Field of the Invention

The present invention relates to a technique for cooling an actuator mounted on an injection molding machine.

### Description of Related Art

An injection molding machine may be used in high-cycle molding in which a series of processes are repeated in a relatively short cycle. The processes start when a molding material such as a resin material is injected into a mold while being melted and end when a molding product is obtained. Under such a situation of use in particular, an electric motor and another actuator mounted on the injection molding machine may generate an increasing amount of heat and the temperatures of the electric motor and the actuator may rise to a large extent. Examples of the electric motor include a plasticizing motor, an injection motor, and a mold clamping motor.

In contrast and in general, as for the actuator of the injection molding machine described above, dissipation of the heat that is generated during use is performed by air cooling by means of, for example, a fan disposed around the actuator or liquid cooling by means of a coolant such as water flowing near an actuator case of the exterior of the actuator.

Techniques related to liquid cooling of an actuator are described in, for example, Japanese Examined Utility Model Publication No. 6-1392, Japanese Unexamined Patent Publication No. 2004-23816, Japanese Unexamined Patent Publication No. 2004-32867, and Japanese Unexamined Utility Model Publication No. 3-59820.

Japanese Examined Utility Model Publication No. 6-1392 discloses "an electric injection molding machine (1) for clean room molding running each process by using an electric motor as a drive source, in which each of an injection motor (2), a plasticizing motor (3), a mold opening/closing motor (4), and an eject motor (5) is a water-cooled servomotor suppressing motor heat generation by means of cooling water of a cooling water pipe (6)". Here, "the heat that is generated from the inside of the motor is removed by the cooling water from the cooling water pipe 6 being allowed to flow to a jacket disposed on the outer periphery of each of the water-cooled servomotors of the injection motor 2, the plasticizing motor 3, the mold opening/closing motor 4, and the eject motor 5".

Described in Japanese Unexamined Patent Publication No. 2004-23816 is "a cooling device of a drive unit having (a) a drive unit, (b) a load device operated by the drive unit being driven, and (c) a cooling unit cooling the drive unit, in which (d) the cooling unit is provided with a cooling medium feed port on a load side connected to the load device in the drive unit and a cooling medium discharge port on a non-load side not connected to the load device". To be more specific as to this "cooling device", "a jacket 51 as a cooling unit is attached to the outer periphery of the drive unit case 72 so that a motor 71 is cooled by radiation of the heat generated by the motor 71 being driven" as illustrated in Fig. 1 of Japanese Unexamined Patent Publication No. 2004-23816.

Described in Japanese Unexamined Patent Publication No. 2004-32867 is "a cooling device of a drive unit having (a) a drive unit, (b) a cooling unit cooling the drive unit, (c) a first tank accommodating a cooling medium, (d) a second tank communicating with the first tank and accommodating a cooling medium, (e) a pump suctioning the cooling medium in the first tank and supplying the cooling medium to the cooling unit, and (f) a heat exchanger cooling the cooling medium discharged from the cooling unit and returning the cooling medium to the second tank". According to the description of Japanese Unexamined Patent Publication No. 2004-32867, "a jacket 51 as a cooling unit is attached to the outer periphery of the drive unit case 24 so that a motor 11 is cooled by radiation of the heat generated by the motor 11 being driven".

Described in Japanese Unexamined Utility Model Publication No. 3-59820 is "an electric injection molding machine having (a) an injection unit using an AC servomotor as a drive source and (b) a cover surrounding the injection unit, in which (c) a pipe through which a cooling fluid flows is arranged on the cover and (d) a heat radiation fin is provided outside".

It shouldbenoted that techniques related to liquid cooling of a motor or the like are described in Japanese Unexamined Patent Publication No. 10-52002, Japanese Unexamined Utility Model Publication No. 6-44378, and Japanese Unexamined Utility Model Publication No. 3-91053 although Japanese Unexamined Patent Publication No. 10-52002, Japanese Unexamined Utility Model Publication No. 6-44378, and Japanese Unexamined Utility Model Publication No. 3-91053 are not related to an actuator of an injection molding machine.

Described in Japanese Unexamined Patent Publication No. 10-52002 is "a water-cooled canned motor having a structure in which a motor is cooled by water flowing through a water cooling jacket provided on the outer periphery of a motor frame". Described in Japanese Unexamined Utility Model Publication No. 6-44378 is "a rotating electric machine such as a water-cooled electric motor that is easy to assemble, compact in terms of outer diameter, free from concerns over water leakage, and satisfactory in terms of cooling performance is provided, in which a copper or stainless steel pipe 2 formed in a helical shape is cast in a frame 1, which is an aluminum casting, and a cooling medium flows through the pipe 2." In the "water-cooled motor structure" that is described in Japanese Unexamined Utility Model Publication No. 3-91053, "a casting constitutes a motor case 1 and one cooling pipe 2 wound in a helical shape is embedded in a wall 1a of the motor case 1".

German Patent Application Publication No. DE 10 2015 221 115 A1 discloses an electric machine having a cooling jacket constituted by and outer casing wall and a covering cylindrical lid. A similar technology is disclosed in German Patent Application Publication No. DE 10 2014 102 632 A1, United States Patent Application Publication No. US 2005/0151431 A1 and United Kingdom Patent Application Specification GB 883827 A.

European Patent Application Publication No. EP 2 804 291 A1 and United States Patent Application Publication No. US 2003/0048031 A1 disclose solutions for cooling an electric motor inside its casing.

European Patent Application Publication No. EP 2 182 309 A1 and German Patent Application Publication No. DE 10 2008 003 724 A1 disclose actuator cooling devices for electric actuators.

### SUMMARY OF THE INVENTION

In an actuator mounted on an injection molding machine, a hole-shaped coolant flow path may be formed, by processing such as bent hole processing, in a peripheral wall constituting a case of the actuator. Alternatively, a pipe-shaped member serving as a coolant flow path may be embedded and disposed by being cast in.

However, since the flow path is formed in the peripheral wall of the actuator case in this case, it is necessary to replace the entire actuator as well as the flow path in the event of, for example, clogging or corrosion of the flow path. Inaddition, in the case of processing into the peripheral wall of the actuator case, it is difficult to form a continuous hole-shaped flow path in the actuator case of the actuator having a relatively long total length.

In addition, a liquid cooling jacket disposed on the outer peripheral side of an actuator case as described in Japanese Examined Utility Model Publication No. 6-1392, Japanese Unexamined Patent Publication No. 2004-23816, and Japanese Unexamined Patent PublicationNo. 2004-32867 needs to be prepared in accordance with an actuator in which the liquid cooling jacket is used and man-hours are required to manufacture the liquid cooling jacket.

Japanese Unexamined Utility Model Publication No. 3-59820 teaches that an injection unit cover disposed around an AC servomotor at a predetermined interval from the AC servomotor is provided with a cooling fluid pipe. When the injection unit cover is liquid-cooled, the present of an air layer between the injection unit cover and the AC servomotor may result in an increase in thermal resistance and it is undeniable that the AC servomotor may be insufficiently cooled.

The present invention aims to solve such a problem, and an object of the present invention is to provide an actuator for mounting on an injection molding machine excellent in maintainability and allowing a coolant flow path to be easily provided, an actuator cooling device, an injection molding machine, and a method for using an actuator cooling device.

One actuator for mounting on an injection molding machine that is capable of solving the above-described problem is an actuator mounted on an injection molding machine and includes an actuator case constituting an exterior of the actuator and having a plurality of outer surfaces and a plurality of pipe-shaped flow path members which are respectively provided on the outer surfaces and each have a flow path through which a coolant flows. The actuator case has a recessed portion and/or protrusion for the pipe-shaped flow path members provided as a part of the outer surface on the outer surface of the actuator case. The plurality of the pipe-shaped flow path members are interconnected by a flow path connection portion.

According to the actuator for mounting on an injection molding machine described above, the recessed portion and/or protrusion for a flow path is provided as a part of the outer surface on the outer surface of the actuator case, and thus the actuator is excellent in maintainability and the coolant flow path can be easily provided.

### BRIEF DESCRIPTION OF THE DRAWINGS

Fig. 1 is a perspective view illustrating an actuator of one embodiment of the present invention along with a pipe-shaped flow path member that can be attached to an outer surface of an actuator case.
Fig. 2 is a schematic vertical cross-sectional view taken along line II-II of Fig. 1.
Fig. 3 is a perspective view illustrating the actuator of Fig. 1 in a state where the pipe-shaped flow path member is attached to the outer surface of the actuator case.
Fig. 4 is a side view of the actuator illustrated in Fig. 3.
Fig. 5 is a perspective view illustrating the actuator of Fig. 1 along with a cover plate and the pipe-shaped flow path member that can be attached to the outer surface of the actuator case.
Figs. 6A and 6B is a perspective view illustrating an actuator of another embodiment in states prior and subsequent to pipe-shaped flow path member attachment.
Figs. 7A and 7B is a perspective view illustrating an actuator of still another embodiment in states prior and subsequent to pipe-shaped flow path member attachment.
Fig. 8 is a perspective view illustrating an actuator of still another embodiment along with a lid-shaped flow path member that can be attached to the outer surface of the actuator case.
Fig. 9 is a perspective view illustrating an actuator of still another embodiment.
Fig. 10 is a perspective view illustrating the actuator of Fig. 9 in a state where a cover member and the cover plate of the outer surface are removed.
Fig. 11 is a front view of the actuator of Fig. 10.
Fig. 12 is a side view of the actuator of Fig. 10.
Fig. 13 is a schematic diagram illustrating a cooling device of one embodiment of the present invention.
Fig. 14 is a graph illustrating an example of coolant temperature control that can be performed by means of the cooling device of Fig. 13.
Fig. 15 is a cross-sectional view illustrating an example of an injection unit of an injection molding machine on which an actuator can be mounted.
Fig. 16 is a schematic cross-sectional view illustrating an example of an injection unit including the actuator of Fig. 9.

### DETAILED DESCRIPTION OF THE INVENTION

Hereinafter, embodiments of the present invention will be described in detail with reference to the drawings. (Actuator)

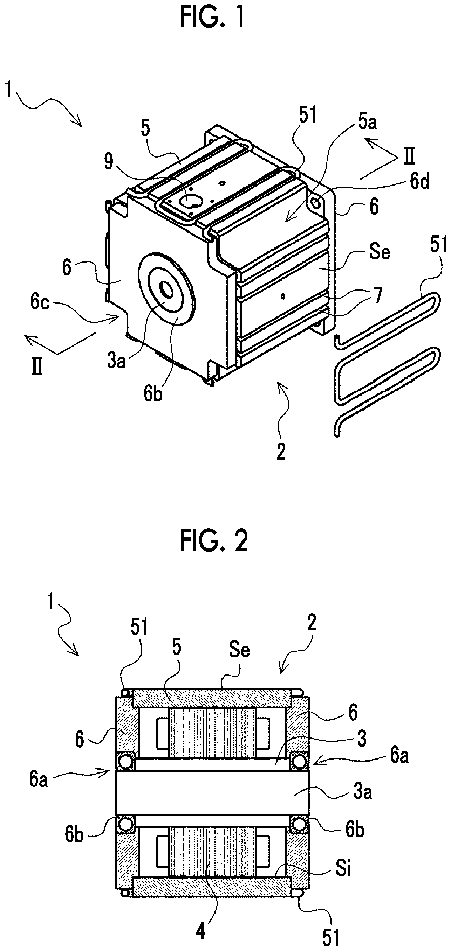

In Fig. 1, reference numeral 1 denotes an actuator mounted on an injection molding machine and reference numeral 2 denotes an actuator case constituting the exterior of the actuator 1.

As illustrated in a vertical cross-sectional view along a rotation axis direction in Fig. 2, the illustrated actuator 1 is, for example, an AC servomotor or another electric motor including an output shaft 3a, a rotor 3 as a rotor provided around the output shaft 3a, a stator 4 as a stator including a coil disposed on the outer peripheral side of the rotor 3, and a stator frame 5 provided with the stator 4 attached to an inner surface Si.

The actuator case 2 is a casing including, for example, the tubular stator frame 5 in which the inner and outer outline shapes of a horizontal cross section are rectangular shapes, other polygonal shapes, circular shapes, or the like and a flange 6 closing the opening of each end portion of the stator frame 5 in the rotation axis direction. Here, an outer surface Se of the actuator case 2 corresponds to an outer surface facing the outer peripheral side of the stator frame 5. Substantially and as a whole, the stator frame 5 in the illustrated example has a square tube shape having a substantially square horizontal cross section. The four circumferential corner portions of the stator frame 5 are cut out, and quadrangular prism-shaped recessed portions 5a are provided in the four corner portions. Correspondingly, recesses 6c having a shape corresponding to the recessed portions 5a are formed at the four corners of one flange 6 as well. Although the other flange 6 does not have such recesses, through-holes 6d are provided at the four corners of the other flange 6. It should be noted that the output shaft 3a is disposed to pass through a hole portion 6a provided in the middle of each flange 6 and the output shaft 3a is held by a bearing 6b attached in the hole portion 6a as illustrated in Fig. 2.

However, although not illustrated, the present invention can also be applied to various actuators such as hydraulic cylinders and the present invention is particularly effective for those capable of generating a large amount of heat during use. It should be noted that the actuator 1 can be various motors mounted on an injection molding machine in a case where the actuator 1 is an electric motor. Examples of the motors include a plasticizing motor driving the rotational operation of a screw sending a molding material to a cylinder tip part while melting the molding material such as a resin material in a cylinder, an injection motor driving the advancing and retreating operation of a screw during, for example, filling of a mold unit with a molding material, a mold clamping motor driving the mold clamping and opening operation of a mold unit, and a mold space adjustment motor for changing or adjusting the mold clamping force of a mold unit.

By the way, such an actuator may generate a large amount of heat depending on the manner of use, examples of which include high-cycle molding in which a series of injection molding processes are repeated in a short cycle by means of an injection molding machine.

In general, an actuator case is provided with a flow path through which a coolant such as water and oil flows so that a rise in temperature attributable to heat generation during use is suppressed and an actuator is cooled.

Here, in the related art, a flow path was provided in an actuator case by, for example, a peripheral wall constituting the actuator case being processed and the hole-shaped flow path being formed in the peripheral wall or a pipe-shaped member used as the flow path being cast in during the casting of the actuator case and the pipe-shaped member being embedded in the peripheral wall of the actuator case.

In a case where a flow path is embedded in the peripheral wall of an actuator case in this manner, it is necessary to replace an actuator in whole in the event of a flow path-related problem such as the flow path being clogged with rust attributable to corrosion, impurities in industrial water that can be used as a coolant, or the like.

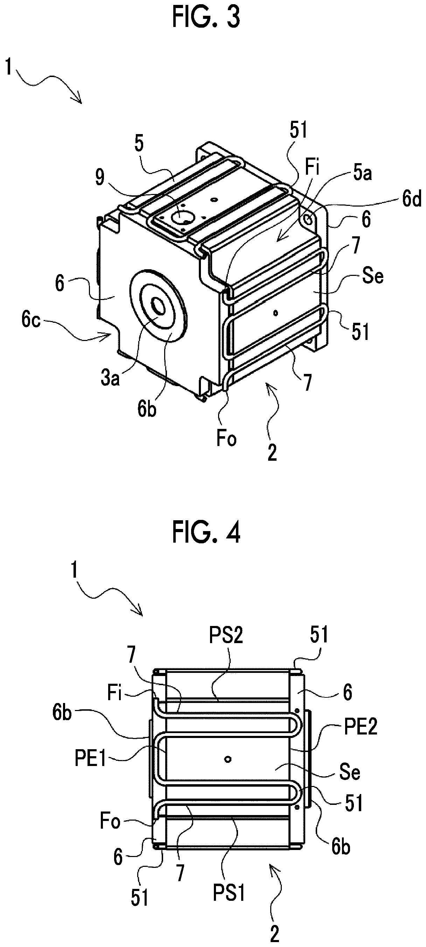

In contrast, in the embodiment illustrated in Fig. 1, a recessed portion 7 for a flow path, which is a part of the outer surface Se and is recessed from the outer surface Se, is provided on the outer surface Se of the actuator case 2. As illustrated in Figs. 3 and 4, a pipe-shaped flow path member 51 serving as a flow path is attached to the recessed portion 7 for a flow path. It should be noted that the four main outer surfaces Se of the actuator case 2 are respectively provided with the recessed portions 7 for a flow path and the pipe-shaped flow path members 51 having substantially the same configuration in the illustrated example.

According to the above, the pipe-shaped flow path member 51 is removed from the outer surface Se of the actuator case 2 in a case where a problem such as clogging has occurred in the flow path of the pipe-shaped flow path member 51, and then the problem of the pipe-shaped flow path member 51 can be easily addressed or replacement with a new pipe-shaped flow path member 51 can be easily performed. Accordingly, the actuator 1 of this embodiment is more excellent in maintainability than those of the related art in which a flow path is provided in the peripheral wall of an actuator case.

In addition, the pipe-shaped flow path member 51 made of metal, resin, or the like can be easily formed by, for example, processing with respect to a straight pipe or welding or deposition of a plurality of pipe members in accordance with the form of a flow path to be provided on the outer surface Se of the actuator case 2. Accordingly, the pipe-shaped flow path member 51 can be made in a simpler manner and with less man-hours than in the case of the above-described liquid cooling jacket manufacturing.

Further, in a case where the recessed portion 7 for a flow path is formed by processing on the outer surface Se of the actuator case 2, the outer surface Se exposed to the outside is easily processed. Even when the actuator 1 has a long total length in the rotation axis direction of the rotor 3 (left-right direction of Fig. 4), such processing onto the outer surface Se can be performed without difficulty. The pipe-shaped flow path member 51 that is appropriate may be prepared accordingly.

Here, as illustrated in Figs. 1 to 4, the recessed portion 7 for a flow path provided on the outer surface Se of the actuator case 2 has a groove shape extending on the outer surface Se and the pipe-shaped flow path member 51 can be disposed inside the recessed portion 7 for a flow path.

Made with regard to the attachment of the pipe-shaped flow path member 51 into the groove-shaped recessed portion 7 for a flow path is, for example, the pipe-shaped flow path member 51 having an outer diameter slightly smaller than the horizontal cross-sectional dimension of the groove-shaped recessed portion 7 for a flow path (dimension of a cross section in a direction perpendicular to a longitudinal direction). Then, the small-diameter pipe-shaped flow path member 51 is fitted into the groove-shaped recessed portion 7 for a flow path. Subsequently, the diameter of the pipe-shaped flow path member 51 is increased by the action of internal pressure, and the pipe-shaped flow path member 51 is engaged in the recessed portion 7 for a flow path. As a result, the pipe-shaped flow path member 51 can be attached into the recessed portion 7 for a flow path.

Alternatively, the pipe-shaped flow path member 51 may be heated after fitting into the groove-shaped recessed portion 7 for a flow path and the surface of the pipe-shaped flow path member 51 may be caused to plastically flow and joined to the inner surface of the recessed portion 7 for a flow path.

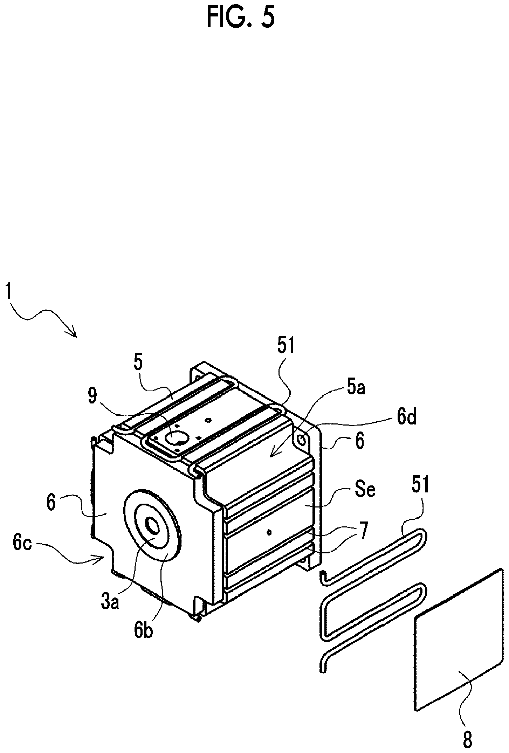

Alternatively, the pipe-shaped flow path member 51 can be fitted into the groove-shaped recessed portion 7 for a flow path, the recessed portion 7 for a flow path can be subsequently covered from above with a cover plate 8 as illustrated in Fig. 5, and the pipe-shaped flow path member 51 can be sandwiched and fixed between the recessed portion 7 for a flow path and the cover plate 8. Although the cover plate 8 in the illustrated example has a rectangular plate shape and covers substantially the entire outer surface Se, the cover plate 8 may cover at least a part of the pipe-shaped flow path member 51 in the groove-shaped recessed portion 7 for a flow path. It should be noted that the cover plate 8 can be attached to the outer surface Se or the like by fixing means such as a screw.

A filler or a heat transfer agent can be sandwiched as necessary between the recessed portion 7 for a flow path and the pipe-shaped flow path member 51.

The shapes of extension of the pipe-shaped flow path member 51 and the groove-shaped recessed portion 7 for a flow path on the outer surface Se of the actuator case 2 can be appropriately determined in accordance with an anticipated effect of cooling by the flow path on the outer surface Se and other conditions. However, from the viewpoint of obtaining a sufficient cooling effect, it is desirable that the pipe-shaped flow path member 51 extends all over the outer surface Se.

When the outer surface Se is viewed from the front in the illustrated embodiment, the flow path of the pipe-shaped flow path member 51 is curved from a direction inclined with respect to or perpendicular to the rotation axis direction toward the direction parallel to the rotation axis direction and enters onto the outer surface Se along the direction parallel to the rotation axis direction on one end portion PE1 side of the rotation axis direction of the rotor 3 (left-right direction of Fig. 4) on one side portion PS1 side of the outer surface Se in the circumferential direction of the rotor 3 (up-down direction in Fig. 4). Then, the flow path extends in the rotation axis direction while reversing the traveling direction by being curved or bent on each of the one end portion PE1 side and the other end portion PE2 side of the rotation axis direction until reaching the other side portion PS2 from the one side portion PS1. In other words, the flow path extends in meandering manner from the one side portion PS1 toward the other side portion PS2. On the other side portion PS2 side, the flow path exits to the outside from the outer surface Se along the direction parallel to the rotation axis direction and is curved from the direction parallel to the rotation axis direction toward a direction inclined with respect to or perpendicular to the rotation axis direction on the one end portion PE1 side of the rotation axis direction of the rotor 3 (left-right direction of Fig. 4).

By the flow path extending in this manner on each of the one side portion PS1 side and the other side portion PS2 side, outside the outer surface Se, and in a direction inclined with respect to or perpendicular to the rotation axis direction of the rotor 3, the flow path can be provided without interference with a part of the actuator case 2 that can be provided to be adjacent in the rotation axis direction. In other words, in a case where the flow path portion exiting from the outer surface Se extends in parallel with the rotation axis direction of the rotor3, there is a possibility of interference with apart adjacent in the rotation axis direction. Preferably, the flow path exits from the outer surface Se in a direction perpendicular to the rotation axis direction as in the illustrated example.

In addition, in a case where the actuator 1 is attached to a motor support plate (described later) or the like on the other end portion PE2 side of the rotation axis direction, it is preferable to dispose the pipe-shaped flow path member 51 such that a flow path inlet Fi and a flow path outlet Fo are positioned on the one end portion PE1 side of the rotation axis direction, which is opposite to the side on which the actuator 1 is attached. As a result, it is easy to secure a space for pipe connection particularly in a case where, for example, the actuator 1 is fixed and supported in a cantilever manner, and thus the actuator 1 is excellent in maintainability. It should be noted that it is also possible to replace the end portion of the pipe-shaped flow path member 51 as the flow path inlet Fi and the end portion of the pipe-shaped flow path member 51 as the flow path outlet Fo with each other by reversing the direction in which a liquid flows in the pipe-shaped flow path member 51.

The same can be said for the positions of the flow path inlet Fi and the flow path outlet Fo of a recessed portion 37 for a flow path (described later).

It should be noted that the flow path of the pipe-shaped flow path member 51 here has a larger meandering interval in the circumferential middle portion of the rotor 3 than in another portion in order to avoid a hole portion 9 for a motor wire, which can be provided slightly near one end portion in the rotation axis direction in a substantially middle region of the rotor 3 in the circumferential direction, on the at least one outer surface Se of the actuator case 2.

Further, in this embodiment, the recessed portion 7 for a flow path has the shape of four linear grooves extending in the rotation axis direction to correspond to a linear portion such that the linear portion of the pipe-shaped flow path member 51 extending in the rotation axis direction is disposed inside the recessed portion 7 for a flow path. It should be noted that the curved portions of the pipe-shaped flow path member 51 on the one end portion PE1 side and the other end portion PE2 side are positioned to protrude in the rotation axis direction from the groove-shaped recessed portion 7 for a flow path. The recessed portion 7 for a flow path having such a linear groove shape is preferable in that processing onto the outer surface Se is easy.

Although not illustrated, it is also possible that the recessed portion for a flow path has, for example, a groove shape including a curve or a bend such that both the linear portion and the curved portion of the pipe-shaped flow path member 51 are disposed inside the recessed portion for a flow path.

The recessed portion for a flow path is not limited to the above-described groove-shaped recessed portion for a flow path insofar as the recessed portion for a flow path has a shape in which at least a part of the pipe-shaped flow path member 51 can be disposed inside the recessed portion for a flow path.

In addition, it is also possible that the recessed portion for a flow path has a recessed shape other than a groove shape.

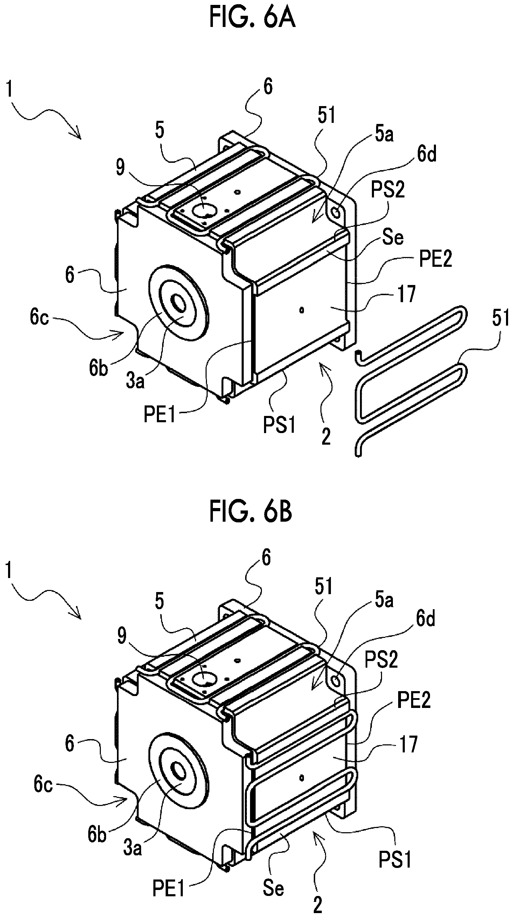

As can be seen from Fig. 6B, a recessed portion 17 for a flow path of the embodiment illustrated in Figs. 6A and 6B is recessed and has a rectangular shape or another shape in a front view of the outer surface Se. This recessed portion 17 for a flow path, which is recessed, reaches the other end portion PE2 from the one end portion PE1 of the outer surface Se in the rotation axis direction and occupies a relatively large region also in the circumferential direction. As illustrated in Fig. 6B, inside the recessed portion 17 for a flow path, the pipe-shaped flow path member 51 is disposed with the entire pipe-shaped flow path member 51 from the linear portion on the one side portion PS1 side to the linear portion on the other side portion PS2 side incorporated. It should be noted that the actuator 1 illustrated in Figs. 6A and 6B has substantially the same configuration as the actuator illustrated in Fig. 1 except for the shape of the recessed portion 17 for a flow path provided on one outer surface Se of the actuator case 2.

In addition, the outer surface Se can also be provided with a protrusion for a flow path protruding from the outer surface Se instead of a recessed portion for a flow path such as the recessed portion for a flow path described above.

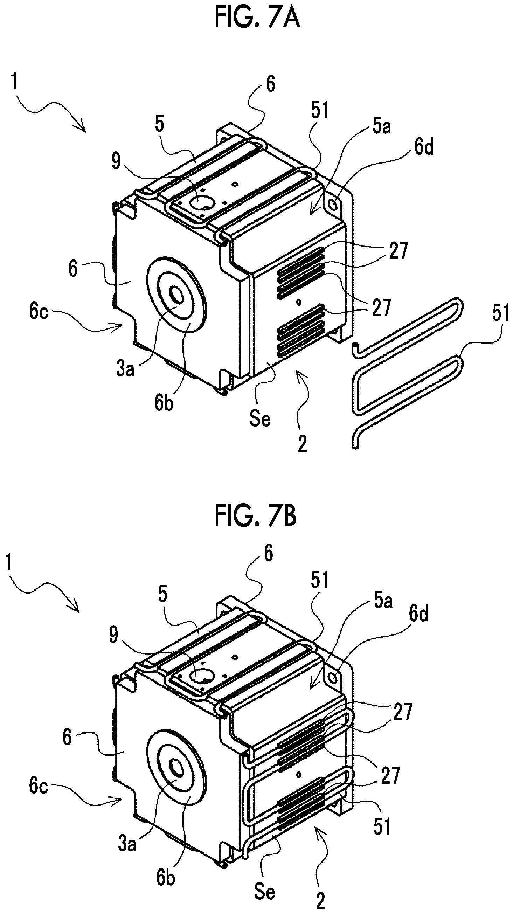

In the embodiment exemplified in Figs. 7A and 7B, columnar protrusions 27 for a flow path such as a plurality of prisms protruding from the outer surface Se and extending in the rotation axis direction are provided at intervals in the circumferential direction substantially in the middle region of the outer surface Se in the rotation axis direction. As illustrated in Fig. 7B, the protrusions 27 for a flow path are capable of sandwiching and holding the linear portion of the pipe-shaped flow path member 51 or the like between those adjacent in the circumferential direction. The protrusion 27 for a flow path is a part of the outer surface Se and is integral with the outer surface Se. The protrusion for a flow path is capable of having various shapes insofar as the shapes allow the pipe-shaped flow path member 51 to be held.

The actuator 1 of Figs. 7A and 7B is substantially the same as the actuator illustrated in Fig. 1 except for one outer surface Se provided with the protrusion 27 for a flow path.

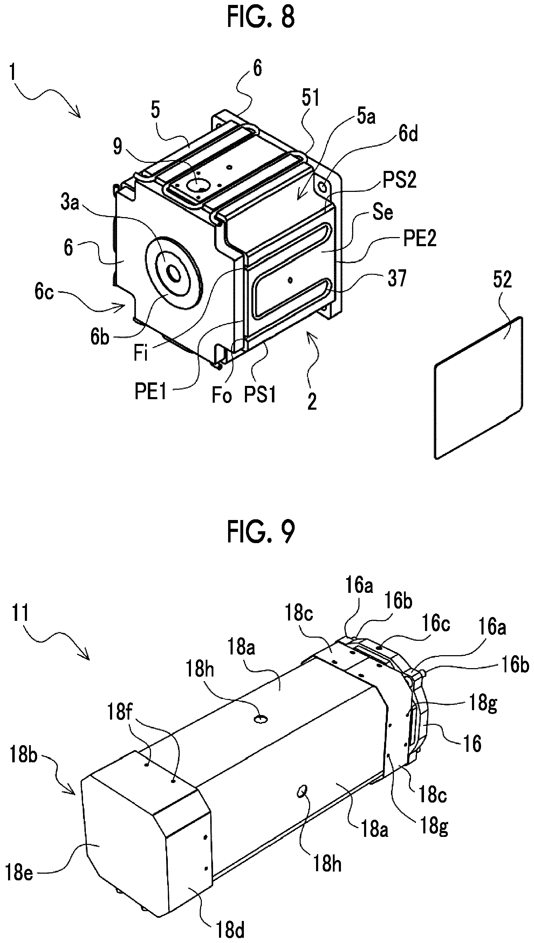

Still another embodiment of the actuator 1 is illustrated in Fig. 8.

The actuator 1 of Fig. 8 has substantially the same configuration as the actuator illustrated in Fig. 1 except that a part of a flow path is formed by the groove-shaped recessed portion 37 for a flow path, which is provided in one outer surface Se, is recessed from the outer surface Se, and extends.

A lid-shaped flow path member 52 covering the recessed portion 37 for a flow path is attached to the outer surface Se. As a result, a flow path is partitioned and formed between the groove-shaped recessed portion 37 for a flow path and the lid-shaped flow path member 52 covering the recessed portion 37 for a flow path. Although the lid-shaped flow path member 52 may be any lid-shaped flow path member capable of covering the recessed portion 37 for a flow path, the lid-shaped flow path member 52 in the illustrated example has a rectangular plate shape and covers substantially the entire outer surface Se. The lid-shaped flowpath member 52 is configured such that, for example, the lid-shaped flow path member 52 can be fixed to the outer surface Se. In addition, as necessary, the lid-shaped flow path member 52 may be provided with a seal member (not illustrated) interposed between the lid-shaped flow path member 52 and the outer surface Se and preventing liquid leakage.

More specifically, this recessed portion 37 for a flow path includes a linear portion entering the outer surface Se from the one end portion PE1 on the one side portion PS1 side and extending in the rotation axis direction and a curved portion reversed on each of the one end portion PE1 side and the other end portion PE2 side, and this recessed portion 37 for a flow path is shaped to exit from the outer surface Se from the one end portion PE1 on the other side portion PS2 side. However, it is possible to appropriately change the shape of the recessed portion for a flow path serving as a part of the flow path in accordance with, for example, an anticipated flow path shape. Although not illustrated, in some cases, it is preferable to provide such a recessed portion for a flow path to become a flow path such that the recessed portion exits to the outside from the outer surface in a direction inclined with respect to or perpendicular to the rotation axis direction of the rotor.

The above-described recessed portion 37 for a flow path used as a part of the flow path is also included in the recessed portion and/or protrusion for a flow path mentioned here. "For a flow path" of the recessed portion and/or protrusion for a flow path means that the recessed portion and/or protrusion is directly used for flow path arrangement or formation onto the outer surface Se. Specifically, as described in the above-described embodiment, the recessed portion and/or protrusion holding the flow path of the pipe-shaped flow path member from the outside of the flow path, the recessed portion constituting a part of the flow path, or the like becomes the recessed portion and/or protrusion for a flow path.

In order to provide the above-described recessed portion and/or protrusion for a flow path on the outer surface Se as a part of the outer surface Se of the actuator case 2, the actuator case 2 having the outer surface Se with the recessed portion and/or protrusion for a flow path can be formed by extrusion molding or casting. Alternatively, processing such as cutting may be performed on the surface of the actuator case 2, which has a flat surface shape or the like, for formation into an outer surface Sa having the recessed portion and/or protrusion for a flow path.

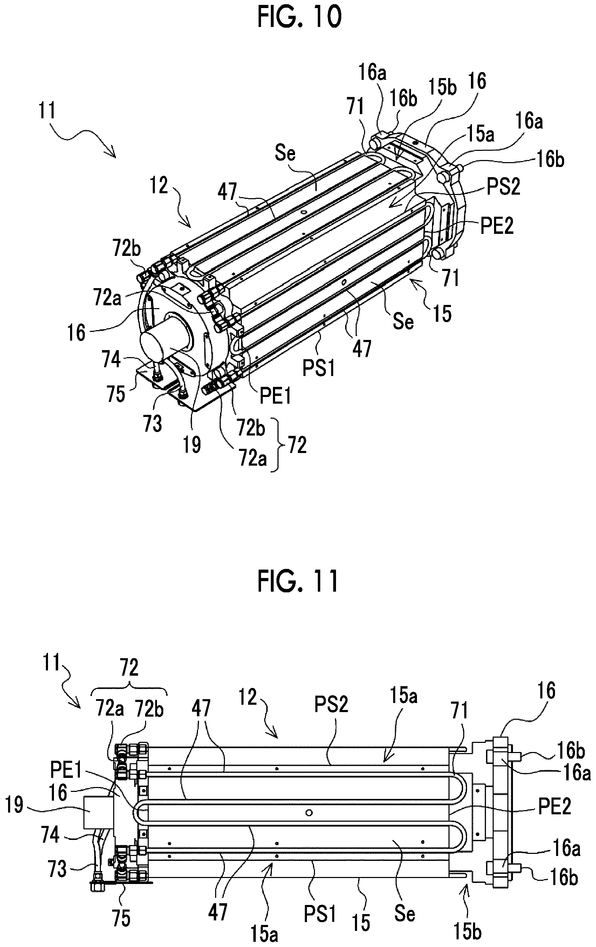

An actuator 11 of another embodiment is illustrated in Figs. 9 to 12. It is possible that the internal structure of this actuator 11 is substantially the same as the internal structure of the actuator 1 described above, and thus repeated description here are omitted. As illustrated in Fig. 10, an actuator case 12 of the actuator 11 includes a stator frame 15 having a polygonal horizontal cross section and a flange 16 provided in each end portion of the stator frame 15. Substantially and as a whole, this stator frame 15 has a square tube shape having a substantially square horizontal cross section. The four circumferential corner portions of the stator frame 15 are cut out, and quadrangular prism-shaped recessed portions 15a are provided in the four corner portions. Here, the outer surfaces Se that exclude the recessed portions 15a of the stator frame 15 are referred to as the four main outer surfaces Se of the actuator case 12. It should be noted that one flange 16 positioned on the near side of Fig. 10 has a substantially disk shape . The other flange 16 positioned on the backside of Fig. 10 has a flat plate shape having a polygonal shape in a front view. Provided in four circumferential places of the flange 16 are a hole-shaped connecting portion 16a protruding to the outer peripheral side and a bolt 16b inserted in the connecting portion 16a. A connecting hole 16c such as a screw can be provided in at least one place of the side surface of the other flange 16. Provided between the other flange 16 and the stator frame 15 is a step portion 15b, which is recessed below the outer surface Se of the stator frame 15 over the entire circumference.

As illustrated in Figs. 10 and 11, each of the four main outer surfaces Se of the actuator case 12 of the actuator 11 is provided with a groove-shaped recessed portion 47 for a flow path, to which a pipe-shaped flow path member 71 serving as a flow path is attached, as in the case of the actuator 1 illustrated in Figs. 1 and 3 to 5. Each recessed portion 47 for a flow path is linearly formed along the rotation axis direction (left-right direction of Fig. 11) on each outer surface Se and is formed to pass through each outer surface Se from the one end portion PE1 to the other end portion PE2 in the rotation axis direction. Further, as for each outer surface Se, the pipe-shaped flow path member 71 extending in a meandering manner is fitted in the four recessed portions 47 for a flow path formed on the outer surface Se. For example, it is possible to fix the pipe-shaped flow path member 71 to the recessed portion 47 for a flow path by interposing paste between the recessed portion 47 for a flow path and the pipe-shaped flow path member 71.

As can be seen from Fig. 11, the flow path that is formed by means of the pipe-shaped flow path member 71 on each outer surface Se enters, in the direction along the rotation axis direction, onto the one end portion PE1 of the outer surface Se in the rotation axis direction on the one side portion PS1 side of the outer surface Se in the circumferential direction (up-down direction of Fig. 11) . The flow path that has entered onto the outer surface Se in this manner meanders and extends in the rotation axis direction while reversing the traveling direction by being curved on each of the one end portion PE1 side and the other end portion PE2 side of the rotation axis direction until reaching the other side portion PS2 from the one side portion PS1. In each of the one end portion PE1 and the other end portion PE2, the curved portion of the pipe-shaped flow path member 71 exits from the inside of the recessed portion 47 for a flow path and protrudes to the outside in the rotation axis direction from the one end portion PE1 or the other end portion PE2 of the outer surface Se. Then, in the other side portion PS2, the flow path exits to the outside from the outer surface Se in the direction along the rotation axis direction. The curved portion of the pipe-shaped flow path member 71 is accommodated and disposed in the above-described step portion 15b between the other flange 16 and the stator frame 15.

As for the four outer surfaces Se that are adjacent to each other in the circumferential direction, the pipe-shaped flow path members 71 attached to the recessed portions 47 for a flow path on the outer surfaces Se are interconnected by means of, for example, a flow path connection portion 72. A resinous flexible tube 72a, a metallic connector 72b, and the like constitute the flow path connection portion 72. More specifically, the flow path connection portions 72 include the bent pipe-shaped connectors 72b connected to the respective end portions of the pipe-shaped flow path members 71 that are adjacent to each other and the straight pipe-shaped flexible tubes 72a interconnecting the connectors 72b. In a case where the flow path connection portion 72 includes the flexible tube 72a, it is possible to absorb, by means of the flexible tube 72a, unevenness or nonuniformity in thickness or outer diameter at a time of manufacturing of the pipe-shaped flow path member 71 or contraction or expansion of the pipe-shaped flow path member 71 attributable to, for example, heating at a time when the pipe-shaped flow path member 71 is fixed into the recessed portion 47 for a flow path by means of paste.

In some cases, the flow path connection portion 72 is positioned to greatly protrude from the one end portion PE1 of the outer surface Se to the outside in the rotation axis direction among the portions constituting the flow path. However, it is preferable that the protruding end of the flow path connection portion 72 is positioned inside an end surface of an encoder 19, which is provided in the end portion on the one end portion PE1 side in the rotation axis direction in the actuator 11, in the rotation axis direction (on the right side in Fig. 11) . In this manner, interference of the flow path connection portion 72 with another part can be suppressed.

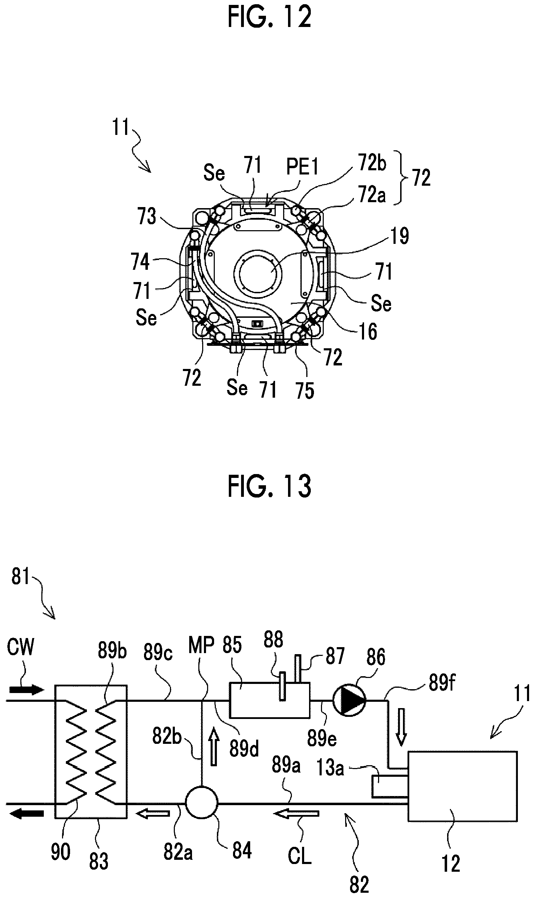

Here, the inflow-side and outflow-side end portions of the pipe-shaped flow path member 71 on each outer surface Se are all positioned on the one end portion PE1 side of the outer surface Se. Then, as illustrated in Fig. 12, three places of the pipe-shaped flow path members 71 of the outer surfaces Se that are adjacent to each other are connected by means of the flow path connection portion 72 on the one end portion PE1 side. Then, the inflow-side end portion of the pipe-shaped flow path member 71 positioned at the end of the flow path closest to one side is connected to a liquid supply tube 73 and the outflow-side end portion of the pipe-shaped flow path member 71 positioned at the end of the flow path closest to the other side is connected to a liquid discharge tube 74. The inflow-side end portion of the pipe-shaped flow path member 71 connected to the liquid supply tube 73 and the outflow-side end portion of the pipe-shaped flow path member 71 connected to the liquid discharge tube 74 are positioned to be adjacent to each other in the circumferential direction. As a result, a coolant supplied from the liquid supply tube 73 sequentially passes through the respective pipe-shaped flow path members 71 on the four outer surfaces Se as flow paths, cools the pipe-shaped flow path members 71, and then is discharged from the liquid discharge tube 74. The respective end portions of the liquid supply tube 73 and the liquid discharge tube 74 are respectively inserted into hole portions provided in a plate member 75 and held by the plate member 75 connected to the stator frame 15 or the like. It is preferable that the liquid supply tube 73 and the liquid discharge tube 74 are positioned inside the end surface of the encoder 19 in the rotation axis direction. As can be seen from Fig. 11, in this example, the plate member 75 is also positioned inside the end surface of the encoder 19 in the rotation axis direction and the end surface of the encoder 19 is positioned at the most rotation-axis-direction end of the actuator 11 on the encoder 19 side.

The vicinity of the outflow-side end portion of the pipe-shaped flow path member 71 connected to the liquid discharge tube 74 tends to be hardly cooled because a coolant risen in temperature through the flow path of the actuator 11 passes. In contrast, when the outflow-side end portion and the inflow-side end portion of the pipe-shaped flow path member 71 connected to the liquid supply tube 73 are disposed in proximity to be adjacent to each other as described above, the coolant that flows through the inflow-side end portion, is yet to pass through the flow path, and is relatively low in temperature cools the vicinity of the outflow-side end portion and it is possible to effectively suppress a rise in temperature in the vicinity of the outflow-side end portion. As a result, it is possible to cool the entire actuator 11 in a well-balanced manner.

In addition, in this case, it is not necessary to make the temperature of the coolant that is supplied from the inflow-side end portion to the flow path so low. In other words, when the outflow-side end portion is disposed away from the inflow-side end portion, the inflow-side end portion needs to be supplied with a coolant lower in temperature than in a case where the outflow-side end portion and the inflow-side end portion are disposed in proximity as described above so that cooling is sufficiently performed up to the outflow-side end portion, which may undergo a rise in temperature as a result.

It should be noted that four cover plates 18a and cover members 18b and 18c are provided in this actuator 11 as illustrated in Fig. 9, the four cover plates 18a respectively cover the four outer surfaces Se where the pipe-shaped flow path member 71 is attached in the recessed portion 47 for a flow path, and the cover members 18b and 18c cover, in whole or in part, the respective end portions of the actuator 11 outside the cover plate 18a in the rotation axis direction. The cover member 18b includes a tubular portion 18d and a plate-shaped portion 18e, the tubular portion 18d surrounds and covers, for example, one flange 16 and the flow path connection portion 72, the tubular portion 18d has an octagonal horizontal cross section, and the plate-shaped portion 18e seals an end portion of the tubular portion 18d. The cover member 18b is attached to the actuator case 12 by means of a connecting portion 18f such as a screw, which is provided in a plurality of circumferential places of the tubular portion 18d. The cover member 18c is positioned in the end portion that is on the side opposite to the cover member 18b in the rotation axis direction. The cover member 18c is configured to include two substantially C-shaped members divided into two in the circumferential direction. The cover member 18c mainly covers the above-described step portion 15b between the other flange 16 and the stator frame 15 and the curved portion of the pipe-shaped flow path member 71. The cover member 18c can also be attached to the actuator case 12 by means of a connecting portion 18g such as a screw, which is provided in a plurality of circumferential places. A hole 18h is formed in the middle of each cover plate 18a.

### (Actuator Cooling Device)

An actuator cooling device is used for cooling a motor such as a servomotor, a ball screw, or another actuator. Here, an actuator cooling device that can be used for cooling the above-described actuator 11 will be described as an example. However, the actuator cooling device can also be used for the above-described actuator 1 and can also be used for actuators other than the actuators 1 and 11. Likewise, flow paths of actuators using the actuator cooling device are not limited to the flow paths of the actuators 1 and 11 described above and the flow paths can be appropriately changed in terms of shape and structure.

An actuator cooling device 81 exemplified in Fig. 13 includes a circulation passage 82 and a heat exchanger 83 provided in the middle of the circulation passage 82. The circulation passage 82 returns a coolant CL, which has passed through a flow path provided in the above-described actuator case 12 of the actuator 11 having an output shaft 13a, to the flow path. The heat exchanger 83 cools the coolant CL by moving the heat of the coolant CL to cold water CW such as industrial water or another refrigerant. The coolant CL cooled by the heat exchanger 83 is sent again to the flow path of the actuator case 12 and used for cooling the actuator 11.

By the way, dew condensation may occur in the actuator 11 when the temperature of the coolant CL during the cooling of the actuator 11 becomes excessively low. The occurrence of such dew condensation may result in, for example, a short circuit in the actuator 11. For short circuit prevention, the actuator cooling device 81 includes a dew condensation suppression mechanism suppressing the occurrence of dew condensation in the actuator 11.

More specifically, the circulation passage 82 of the actuator cooling device 81 has a cooling path 82a allowing the coolant CL to flow through the heat exchanger 83, a bypass path 82b bypassing the heat exchanger 83, extending, and allowing the coolant CL to flow without flowing through the heat exchanger 83, and a direction switching valve 84 provided at the branch point between the cooling path 82a and the bypass path 82b, on an upstream side from the heat exchanger 83. The dew condensation suppression mechanism is configured to include the bypass path 82b and the direction switching valve 84. The direction switching valve 84 is capable of having various configurations insofar as the direction switching valve 84 is capable of performing path switching between the cooling path 82a and the bypass path 82b. Specifically, the direction switching valve 84 can be, for example, an electromagnetic switching valve or a combination of a relief valve and an on-off valve.

In the actuator cooling device 81, the direction switching valve 84 is capable of switching the path through which the coolant CL flows from the cooling path 82a to the bypass path 82b when the temperature of the coolant CL has become excessively low in a case where the coolant CL circulates through the circulation passage 82 and the flow path of the actuator 11 while being cooled by the heat exchanger 83 through the cooling path 82a. Then, the temperature of the coolant CL passing through the bypass path 82b gradually increases because the coolant CL is not cooled by the heat exchanger 83. As a result, it is possible to prevent an excessive decrease in the temperature of the coolant CL and it is possible to effectively suppress the occurrence of dew condensation in the actuator 11. It should be noted that the direction switching valve 84 switches the path through which the coolant CL flows from the bypass path 82b to the cooling path 82a after the temperature of the coolant CL passing through the bypass path 82b has risen to some extent. Then, the coolant CL can be cooled by the heat exchanger 83 by the coolant CL being allowed to flow through the cooling path 82a to a reserve tank 85 (described later) side. In this case, it is not necessary to stop or change the flow of the coldwater CW on the heat exchanger 83 side, and thus pipe clogging is unlikely to occur on the heat exchanger 83 side and the actuator 11 can be stably cooled.

The coolant CL is capable of flowing through the flow path of the actuator case 12 and the circulation passage 82 at all times during the operation of the actuator 11 and the actuator cooling device 81. Inthatcase, the coolant CL may have a constant flow rate without a change in flow rate.

In this actuator cooling device 81, the circulation passage 82 further has the reserve tank 85 and a coolant supply pump 86. The reserve tank 85 is provided in the middle of the circulation passage 82 and on a downstream side from the heat exchanger 83. More specifically, the reserve tank 85 is provided in the middle of the circulation passage 82 and on a downstream side from a merging point MP between the cooling path 82a and the bypass path 82b. The coolant supply pump 86 delivers the coolant CL to the flow path of the actuator case 12, on a downstream side from the reserve tank 85.

In addition, it is preferable that the actuator cooling device 81 includes an ambient temperature sensor 87 measuring an ambient temperature in an environment where the actuator cooling device 81 and the actuator 11 are installed and a liquid temperature sensor 88 measuring the temperature of the coolant CL to be supplied to the flow path of the actuator case 12. The ambient temperature sensor 87 and the liquid temperature sensor 88 can be, for example, thermocouples. In this embodiment, the ambient temperature sensor 87 and the liquid temperature sensor 88 are provided in or around the reserve tank 85.

With the actuator cooling device 81, it is possible to monitor the temperature of the coolant CL by means of the liquid temperature sensor 88 and suppress the occurrence of dew condensation in the actuator 11 by operating the direction switching valve 84 in accordance with a change in the temperature of the coolant CL. Here, for example, the value of the temperature of the coolant CL measured by the liquid temperature sensor 88 and the value of the ambient temperature measured by the ambient temperature sensor 87 are compared. Next, whether to cause the coolant CL that has passed through the flow path of the actuator case 12 to flow to the bypass path 82b or the cooling path 82a is determined in accordance with the result of the comparison. Then, the direction switching valve 84 is controlled in accordance with the determination.

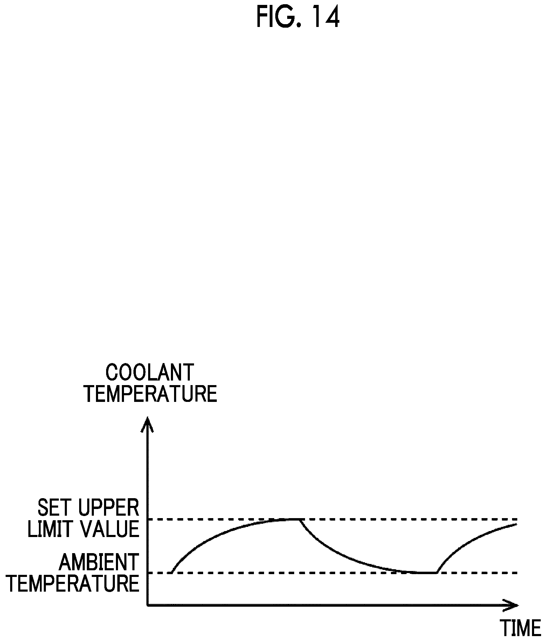

In an example of the control of the coolant temperature that is illustrated in Fig. 14, the coolant CL flowing through the bypass path 82b in the circulation passage 82 of the actuator cooling device 81 is delivered toward the flow path of the actuator case 12 first. Then, the coolant temperature gradually rises as a result of heat generation during the operation of the actuator 11. When the coolant temperature reaches a set upper limit value determined in advance, the path of the coolant CL is switched by the direction switching valve 84 and the coolant CL is allowed to flow to the cooling path 82a. Subsequently, the coolant CL flowing through the cooling path 82a is cooled by the heat exchanger 83 and the temperature of the coolant CL gradually decreases. When the coolant temperature has decreased to the value of the ambient temperature measured by the ambient temperature sensor 87, the direction switching valve 84 switches the path such that the coolant CL flows through the bypass path 82b.

In other words, here, control can be performed such that the coolant CL flows to the bypass path in a case where the temperature of the coolant CL supplied to the flow path of the actuator case 12 is equal to or lower than the ambient temperature and the coolant CL flows to the cooling path 82a in a case where the temperature of the coolant CL is equal to or higher than the set upper limit value. As a result, coolant delivery to the actuator 11 at a coolant temperature lower than the ambient temperature is suppressed, and thus the occurrence of dew condensation is effectively suppressed.

It should be noted that the circulation passage 82 of the actuator cooling device 81 illustrated in Fig. 13 further has, more specifically, an inflow-side passage portion 89a interconnecting the flow path of the actuator case 12 and the direction switching valve 84, a passage portion 89b in the heat exchanger 83 in the cooling path 82a, a passage portion 89c guiding the coolant CL that has passed through the passage portion 89b in the cooling path 82a to the merging point MP, a passage portion 89d interconnecting the merging point MP and the reserve tank 85, a passage portion 89e interconnecting the reserve tank 85 and the coolant supply pump 86, and an outflow-side passage portion 89f interconnecting the coolant supply pump 86 and the flow path of the actuator case 12. In addition, the passage that allows the cold water CW to flow has at least a passage portion 90, which passes through the heat exchanger 83.

The dew condensation suppression mechanism according to another embodiment can be configured by, for example, a cold water control unit such as a flow rate control valve (not illustrated) provided in the middle of the passage through which the cold water CW flows and capable of changing the flow rate of the cold water CW. With such a cold water control unit, it is possible to adjust the temperature of the coolant CL by, for example, controlling the flow rate of the cold water CW in accordance with the difference between the temperature of the coolant CL and the ambient temperature. As a result, excessive cooling of the actuator 11 is suppressed and the occurrence of dew condensation can be suppressed. The dew condensation suppression mechanism of such a cold water control unit can be additionally provided in the actuator cooling device 81 in addition to the dew condensation suppression mechanism including the bypass path 82b and the direction switching valve 84 described above. In addition, the cold water control unit may be provided alone in the actuator cooling device 81 without the dew condensation suppression mechanism including the bypass path 82b and the direction switching valve 84. Accordingly, the dew condensation suppression mechanism including the bypass path 82b and the direction switching valve 84 may not be provided in a case where the dew condensation suppression mechanism of the cold water control unit is provided.

### (Injection Unit)

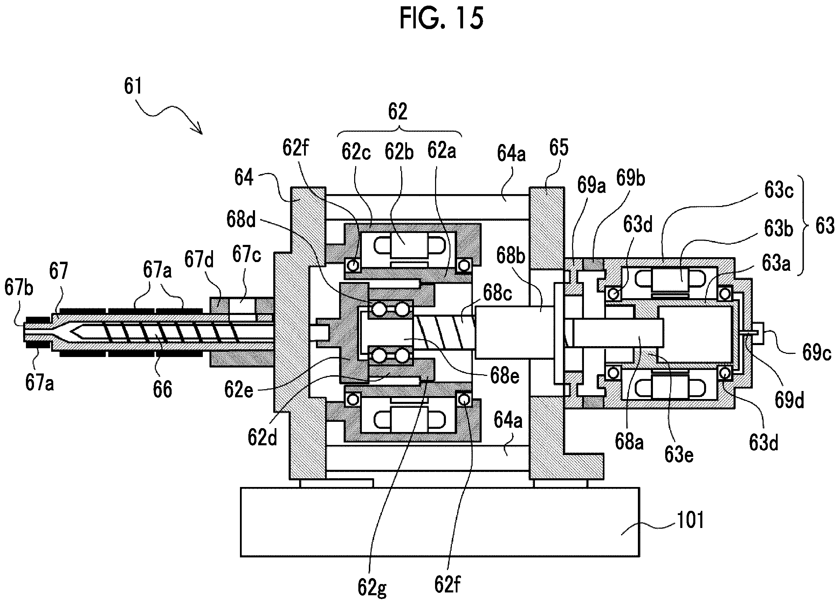

It should be noted that the actuators 1 and 11 as described above can be used as, for example, a plasticizing motor 62 or an injection motor 63 mounted on an injection unit 61 of an injection molding machine illustrated in, for example, Fig. 15.

The injection unit 61 exemplified in Fig. 15 includes the plasticizing motor 62, the injection motor 63, two motor support plates 64 and 65, a screw 66, and a cylinder 67 . The plasticizing motor 62 and the injection motor 63 are fixed to the motor support plates 64 and 65, respectively. The motor support plates 64 and 65 are disposed at an interval in, for example, a standing posture on a slide base 101 of a moving unit. The screw 66 is positioned in front of the motor support plate 64 on the front side (left side in Fig. 15), is driven to rotate by the plasticizing motor 62, and is driven to advance and retreat by the injection motor 63. The cylinder 67 extends forward from the front surface of the motor support plate 64 on the front side and is disposed around and surrounds the screw 66. The plasticizing motor 62 and the injection motor 63 are respectively attached to and supported by the rear surfaces on the rear sides (right side in Fig. 15) of the two motor support plates 64 and 65. The two motor support plates 64 and 65 are interconnected by a rod 64a in a plurality of places around the plasticizing motor 62, examples of which include four places.

Disposed around the cylinder 67 is a heater 67a heating a molding material plasticized by the screw 66 in the cylinder 67. The cylinder 67 has a tip part 67b decreasing in inner diameter and outer diameter on an axial tip end side. The heater 67a is also disposed around the tip part 67b. In addition, the cylinder 67 has a feed port 67c for supplying a molding material into the cylinder 67 on the axial rear end side. A cooler 67d is disposed around the feed port 67c.

The plasticizing motor 62 is configured to mainly include a rotor 62a, a stator 62b disposed around the rotor 62a, and a stator frame 62c surrounding the rotor 62a and the stator 62b and having an inner surface provided with the stator 62b. A rotor 63a is supported by a bearing 62f inside a stator frame 63c in each rotation-axis-direction end portion of the rotor 63a. In addition, the rotor 62a is spline-coupled to a plasticizing spline shaft 62d. This plasticizing spline shaft 62d is connected to a screw attachment portion 62e to which the screw 66 is attached. It should be noted that at least one key 62g corresponding to a key groove provided in the inner peripheral surface of the rotor 62a is formed on at least a part of the outer peripheral surface of the plasticizing spline shaft 62d in the axial direction. As a result, a rotational driving force is transmitted from the plasticizing motor 62 to the screw 66 and the screw 66 can be rotated.

In addition, the injection motor 63 is disposed behind the motor support plate 65, which is positioned behind the plasticizing motor 62. The injection motor 63 also mainly has the rotor 63a, a stator 63b disposed around the rotor 63a, and the stator frame 63c provided to surround the rotor 63a and the stator 63b and having an inner surface provided with the stator 63b. The rotor 63a is supported by a bearing 63d inside the stator frame 63c in each rotation-axis-direction end portion of the rotor 63a. As for the injection motor 63, the rotor 63a is connected to a drive shaft including a screw nut connected to the screw 66 via a bearing. More specifically, this drive shaft has an injection spline shaft 68a spline-coupled to a groove portion 63e provided on the inner peripheral side of the cylindrical rotor 63a, a screw nut 68b connected to the injection spline shaft 68a, a screw shaft 68c screwed into the screw nut 68b, and a rotary shaft 68e rotatably attached via a bearing 68d inside the plasticizing spline shaft 62d. In this structure, the rotational driving force that results from the injection motor 63 is converted into a linear driving force in the direction in which the screw 66 moves forward and backward (left-right direction in Fig. 15) and transmitted to the screw 66.

It should be noted that a pressure detector 69a is disposed between the stator frame 63c of the injection motor 63 and the motor support plate 65. The pressure detector 69a is attached to each of the motor support plate 65 and the screw nut 68b. The pressure detector 69a detects the load that acts on the pressure detector 69a in the driving force transmission path from the injection motor 63 to the screw 66. A tubular portion 69b is provided to be interposed between the pressure detector 69a and the stator frame 63c.

In addition, an encoder 69c, which is connected to the rotor 63a by a shaft portion 69d and detects the rotation of the rotor 63a, is provided on the rear end surface of the stator frame 63c of the injection motor 63 positioned on the side opposite to the drive shaft in the rotation axis direction.

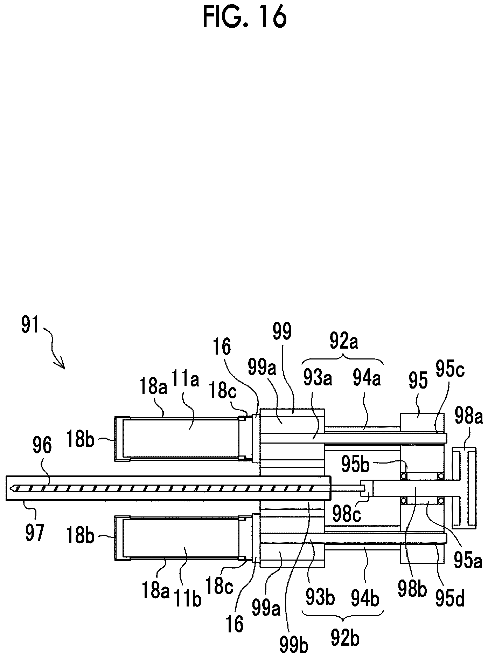

Illustrated in Fig. 16 is another injection unit 91 provided with the actuator 11 described above as injection motors 11a and 11b. This injection unit 91 includes the pair of injection motors 11a and 11b, a pair of ball screws 92a and 92b converting the rotary motion of each actuator 11 into a linear motion in the axial direction (left-right direction of Fig. 16), a plate member 95 attached to the pair of ball screws 92a and 92b and driven to advance and retreat by the ball screws 92a and 92b, and a screw 96 disposed in the middle of the plate member 95 in the width direction of the plate member 95 (up-down direction of Fig. 16) between the pair of injection motors 11a and 11b and between the pair of ball screws 92a and 92b. The screw 96 is disposed in a cylinder 97, which surrounds the screw 96.

In addition, a pulley 98a, a shaft 98b, and a screw attachment portion 98c are provided on the rear end side of the screw 96. The pulley 98a drives the screw 96 to rotate by means of a belt (not illustrated) . The shaft 98b is connected to the pulley 98a. The screw attachment portion 98c is provided on an axial tip end side of the shaft 98b. The screw 96 is attached to the screw attachment portion 98c. A through-hole 95a is formed in the width-direction middle of the plate member 95. The shaft 98b is disposed in the through-hole 95a while being supported by a bearing 95b.

The ball screws 92a and 92b include screw shafts 93a and 93b and nuts 94a and 94b, respectively. The screw shafts 93a and 93b are connected to the output shafts of the injection motors 11a and 11b. The nuts 94a and 94b are attached to the plate member 95 to be coaxial with shaft insertion holes 95c and 95d provided in the plate member 95. In the illustrated example, the screw shafts 93a and 93b are disposed to pass through the nuts 94a and 94b and the shaft insertion holes 95c and 95d.

The nuts 94a and 94b move forward in the axial direction by the screw shafts 93a and 93b being driven to rotate by the injection motors 11a and 11b. Then, with the forward movement, the plate member 95 attached to the nuts 94a and 94b moves the screw 96 forward in the axial direction. As a result, injection operation for moving the screw 96 forward so that amoldingmaterial such as a resin material accumulated in the cylinder 97 is injected toward the mold unit becomes possible.

It should be noted that the above-described cover plate 18a and cover members 18b and 18c cover the respective injection motors 11a and 11b. Around the connection portions between the injection motors 11a and 11b and the screw shafts 93a and 93b, one housing 99 having a cavity portion 99a where each of the connection portions is disposed inside is provided. AU-shaped portion 99b is formed between the cavity portions 99a in the width direction of the housing 99. The upper side of the U-shaped portion 99b is cut out. The cylinder 97 is inserted inside the U-shaped portion 99b.

In the injection unit 91, the injection motors 11a and 11b may generate a large amount of heat during operation in high-cycle molding in particular. Here, when the injection motors 11a and 11b are to be cooled by air cooling by means of a fan or the like, even the cylinder 97 and the screw 96, which are positioned to be adjacent between the injection motors 11a and 11b in the width direction and melt a molding material therein, may be unintentionally cooled. In addition, the efficiency of the air cooling-based cooling of the injection motors 11a and 11b decreases due to the heat of the adjacent cylinder 97 and screw 96. Further, fan installation may lead to a significant increase in the width of the injection unit 91.

Accordingly, it is particularly effective to apply the liquid cooling by means of the coolant described above to cooling of the injection motors 11a and 11b of the injection unit 91.

### Brief Description of the Reference Symbols

1, 11: Actuator
11a, 11b: Injection motor
2, 12: Actuator case
3: Rotor
3a, 13a: Output shaft
4: Stator
5, 15: Stator frame
5a, 15a: Recessed portion
15b: Step portion
6, 16: Flange
16a: Connecting portion
16b: Bolt
16c: Connecting hole
6a: Hole portion
6b: Bearing
6c: Recess
6d: Through-hole
7, 17, 37, 47: Recessed portion for flow path
27: Protrusion for flow path
8, 18a: Cover plate
9: Hole portion
18b, 18c: Cover member
18d: Tubular portion
18e: Plate-shaped portion
18f, 18g: Connecting portion
18h: Hole
19: Encoder
51, 71: Pipe-shaped flow path member
52: Lid-shaped flow path member
61: Injection unit
62: Plasticizing motor
62a: Rotor
62b: Stator
62c: Stator frame
62d: Plasticizing spline shaft
62e: Screw attachment portion
62f: Bearing
62g: Key
63: Injection motor
63a: Rotor
63b: Stator
63c: Stator frame
63d: Bearing
63e: Groove portion
64, 65: Motor support plate
64a: Rod
66: Screw
67: Cylinder
68a: Injection spline shaft
68b: Screw nut
68c: Screw shaft
68d: Bearing
68e: Rotary shaft
69a: Pressure detector
69b: Tubular portion
69c: Encoder
69d: Shaft portion
72: Flow path connection portion
72a: Flexible tube
72b: Connector
73: Liquid supply tube
74: Liquid discharge tube
75: Plate member
81: Actuator cooling device
82: Circulation passage
82a: Cooling path
82b: Bypass path
83: Heat exchanger
84: Direction switching valve
85: Reserve tank
86: Coolant supply pump
87: Ambient temperature sensor
88: Liquid temperature sensor
89a to 89f, 90: Passage portion
91: Injection unit
92a, 92b: Ball screw
93a, 93b: Screw shaft
94a, 94b: Nut
95: Plate member
95a: Through-hole
95b: Bearing
95c, 95d: Shaft insertion hole
96: Screw
97: Cylinder
98a: Pulley
98b: Shaft
98c: Screw attachment portion
99: Housing
99a: Cavity portion
99b: U-shaped portion
101: Slide base
Se: Outer surface
Si: Inner surface
PE1: One end portion
PE2: The other end portion
PS1: One side portion
PS2: The other side portion
Fi: Flow path inlet
Fo: Flow path outlet
CL: Coolant
CW: Cold water
MP: Merging point

## Claims

1. An actuator (1, 11) for mounting on an injection molding machine, the actuator (1, 11) comprising:
an actuator case (2, 12) constituting an exterior of the actuator (1, 11) and having a plurality of outer surfaces (Se) and a plurality of pipe-shaped flow path members (51, 71) which are respectively provided on the outer surfaces (Se) and each have a flow path through which a coolant flows,
wherein the actuator case (2, 12) has a recessed portion (7, 17, 37, 47) and/or protrusion (27) for the pipe-shaped flow path members (51, 71) provided on the outer surface (Se) of the actuator case (2, 12), and
wherein the plurality of the pipe-shaped flow path members (51, 71) are interconnected by a flow path connection portion (72).

2. The actuator (1, 11) for mounting on an injection molding machine according to claim 1, wherein the recessed portion (7, 17, 37, 47) includes a recessed portion (7, 17, 37, 47) recessed from the outer surface (Se).

3. The actuator (1, 11) for mounting on an injection molding machine according to claim 2, wherein the recessed portion (7, 17, 37, 47) has a groove shape extending on the outer surface (Se).

4. The actuator (1, 11) for mounting on an injection molding machine according to claim 2 or 3, wherein the recessed portion (7, 17, 37, 47) has a shape in which the pipe-shaped flow path member (51, 71) can be disposed inside the recessed portion (7, 17, 37, 47).

5. The actuator (1, 11) for mounting on an injection molding machine according to any one of claims 1 to 4,
wherein the protrusion (27) includes a protrusion (27) protruding from the outer surface (Se), and
wherein a plurality of protrusions (27) are capable of sandwiching and holding the pipe-shaped flow path member (51, 71) between those adjacent in a circumferential direction.

6. The actuator (1, 11) for mounting on an injection molding machine according to any one of claims 1 to 5,
wherein the recessed portion (7, 17, 37, 47) includes a groove-shaped recessed portion (7, 17, 37, 47) recessed from the outer surface (Se) and extending on the outer surface (Se), and
wherein the groove-shaped recessed portion (7, 17, 37, 47) and a lid-shaped flow path member (52) covering the recessed portion (7, 17, 37, 47) and attached to the outer surface (Se) constitute a flow path.

7. The actuator (1, 11) for mounting on an injection molding machine according to any one of claims 1 to 6,
wherein the actuator (1, 11) is an electric motor having a rotor (3), a stator (4) disposed on an outer peripheral side of the rotor (3), and a stator frame (5, 15) surrounding the rotor (3) and the stator (4) and having an inner surface provided with the stator (4), and
wherein the actuator case (2, 12) has the stator frame (5, 15).

8. The actuator (1, 11) for mounting on an injection molding machine according to claim 7, wherein the flow path extends to exit outward from the outer surface (Se) in a direction inclined with respect to or perpendicular to a rotation axis direction of the rotor (3) in a front view of the outer surface (Se).

9. The actuator (1, 11) for mounting on an injection molding machine according to any one of claims 1 to 8, further comprising:
an actuator cooling device (81) supplying a coolant to the flow path of the actuator case (2, 12) and including a dew condensation suppression mechanism suppressing dew condensation occurrence in the actuator (1, 11).

10. The actuator (1, 11) for mounting on an injection molding machine according to claim 9,
wherein the actuator cooling device (81) further includes a circulation passage (82) returning the coolant passed through the flow path of the actuator case (2, 12) to the flow path, and
a heat exchanger (83) provided in a middle of the circulation passage (82) and cooling the coolant, and
wherein the circulation passage (82) has a cooling path allowing the coolant to flow through the heat exchanger (83), a bypass path allowing the coolant to flow without flowing through the heat exchanger (83), and a direction switching valve (84) provided at a branch point between the cooling path and the bypass path, on an upstream side from the heat exchanger (83).

11. The actuator (1, 11) for mounting on an injection molding machine according to claim 10, wherein the circulation passage (82) further has, in the middle of the circulation passage (82), a reserve tank (85) provided on a downstream side from the heat exchanger (83) and a coolant supply pump delivering the coolant to the flow path of the actuator case (2, 12), on a downstream side from the reserve tank (85).

12. The actuator (1, 11) for mounting on an injection molding machine according to claim 10 or 11,
wherein the actuator cooling device (81) further includes an ambient temperature sensor measuring an ambient temperature, and
a liquid temperature sensor measuring a temperature of a coolant supplied to the flow path of the actuator case (2, 12).

13. The actuator (1, 11) for mounting on an injection molding machine according to claim 12, wherein a value of the temperature of the coolant measured by the liquid temperature sensor is compared with a value of the ambient temperature measured by the ambient temperature sensor, determination is made as to whether to cause the coolant passed through the flow path of the actuator case (2, 12) to flow to the cooling path or the bypass path in accordance with a result of the comparison, and the direction switching valve (84) is controlled.

## Patentansprüche

1. Aktuator (1, 11) zur Montage an einer Spritzgießmaschine, wobei der Aktuator (1, 11) umfasst:
ein Aktuatorgehäuse (2, 12), das eine Außenseite des Aktuators (1, 11) bildet und mehrere Außenflächen (Se) und mehrere rohrförmige Strömungswegelemente (51, 71) aufweist, die jeweils an den Außenflächen (Se) vorgesehen sind und jeweils einen Strömungsweg aufweisen, durch den ein Kühlmittel strömt,
wobei das Aktuatorgehäuse (2, 12) einen ausgesparten Abschnitt (7, 17, 37, 47) und/oder Vorsprung (27) für die an der Außenfläche (Se) des Aktuatorgehäuses (2, 12) vorgesehenen rohrförmigen Strömungswegelemente (51, 71) aufweist, und
wobei die mehreren rohrförmigen Strömungswegelemente (51, 71) durch einen Strömungswegverbindungsabschnitt (72) miteinander verbunden sind.

2. Aktuator (1, 11) zur Montage an einer Spritzgießmaschine nach Anspruch 1, wobei der ausgesparte Abschnitt (7, 17, 37, 47) einen ausgesparten Abschnitt (7, 17, 37, 47) aufweist, der von der Außenfläche (Se) ausgespart ist.

3. Aktuator (1, 11) zur Montage an einer Spritzgießmaschine nach Anspruch 2, wobei der ausgesparte Abschnitt (7, 17, 37, 47) eine an der Außenfläche (Se) verlaufende Nutenform aufweist.

4. Aktuator (1, 11) zur Montage an einer Spritzgießmaschine nach Anspruch 2 oder 3, wobei der ausgesparte Abschnitt (7, 17, 37, 47) eine Form aufweist, in der das rohrförmige Strömungswegelement (51, 71) innerhalb des ausgesparten Abschnitts (7, 17, 37, 47) angeordnet werden kann.

5. Aktuator (1, 11) zur Montage an einer Spritzgießmaschine nach einem der Ansprüche 1 bis 4,
wobei der Vorsprung (27) einen Vorsprung (27) aufweist, der von der Außenfläche (Se) vorsteht, und
wobei mehrere Vorsprünge (27) in der Lage sind, das rohrförmige Strömungswegelement (51, 71) zwischen den in Umfangsrichtung benachbarten Vorsprüngen einzuklemmen und zu halten.

6. Aktuator (1, 11) zur Montage an einer Spritzgießmaschine nach einem der Ansprüche 1 bis 5,
wobei der ausgesparte Abschnitt (7, 17, 37, 47) einen nutenförmigen, ausgesparten Abschnitt (7, 17, 37, 47) aufweist, der von der Außenfläche (Se) ausgespart ist und sich an der Außenfläche (Se) erstreckt, und
wobei der nutenförmige, ausgesparte Abschnitt (7, 17, 37, 47) und ein deckelförmiges Strömungswegelement (52), das den ausgesparten Abschnitt (7, 17, 37, 47) bedeckt und an der Außenfläche (Se) angebracht ist, einen Strömungsweg bilden.

7. Aktuator (1, 11) zur Montage an einer Spritzgießmaschine nach einem der Ansprüche 1 bis 6,
wobei der Aktuator (1, 11) ein Elektromotor ist, der einen Rotor (3), einen Stator (4), der an einer Außenumfangsseite des Rotors (3) angeordnet ist, und einen Statorrahmen (5, 15) aufweist, der den Rotor (3) und den Stator (4) umgibt und eine mit dem Stator (4) versehene Innenfläche aufweist, und
wobei das Aktuatorgehäuse (2, 12) den Statorrahmen (5, 15) aufweist.

8. Aktuator (1, 11) zur Montage an einer Spritzgießmaschine nach Anspruch 7, wobei der Strömungsweg so verläuft, dass er von der Außenfläche (Se) in eine Richtung nach außen austritt, die in einer Vorderansicht der Außenfläche (Se) in Bezug auf eine Richtung der Drehachse des Rotors (3) geneigt oder senkrecht dazu ist.

9. Aktuator (1, 11) zur Montage an einer Spritzgießmaschine nach einem der Ansprüche 1 bis 8, ferner umfassend:
eine Aktuator-Kühlvorrichtung (81), die dem Strömungsweg des Aktuatorgehäuses (2, 12) ein Kühlmittel zuführt und einen Taukondensations-Unterdrückungsmechanismus enthält, der Auftreten von Taukondensation in dem Aktuator (1, 11) unterdrückt.

10. Aktuator (1, 11) zur Montage an einer Spritzgießmaschine nach Anspruch 9,
wobei die Aktuator-Kühlvorrichtung (81) ferner einen Zirkulationskanal (82), der das durch den Strömungsweg des Aktuatorgehäuses (2, 12) geleitete Kühlmittel zu dem Strömungsweg zurückführt, und
einen Wärmetauscher (83), der in einer Mitte des Zirkulationskanals (82) vorgesehen ist und das Kühlmittel kühlt, aufweist und
wobei der Zirkulationskanal (82) einen Kühlweg, der es dem Kühlmittel ermöglicht, durch den Wärmetauscher (83) zu strömen, einen Bypassweg, der es dem Kühlmittel ermöglicht, zu strömen, ohne durch den Wärmetauscher (83) zu strömen, und ein Richtungsumschaltventil (84) aufweist, das an einem Verzweigungspunkt zwischen dem Kühlweg und dem Bypassweg auf einer stromaufwärtigen Seite von dem Wärmetauscher (83) vorgesehen ist.

11. Aktuator (1, 11) zur Montage an einer Spritzgießmaschine nach Anspruch 10, wobei der Zirkulationskanal (82) ferner in der Mitte des Zirkulationskanals (82) einen Reservetank (85), der stromabwärts von dem Wärmetauscher (83) vorgesehen ist, und eine Kühlmittelzufuhrpumpe aufweist, die das Kühlmittel dem Strömungsweg des Aktuatorgehäuses (2, 12) stromabwärts von dem Reservetank (85) zuführt.

12. Aktuator (1, 11) zur Montage an einer Spritzgießmaschine nach Anspruch 10 oder 11,
wobei die Aktuator-Kühlvorrichtung (81) ferner einen Umgebungstemperatursensor enthält, der eine Umgebungstemperatur misst, und
einen Flüssigkeitstemperatursensor, der eine Temperatur eines Kühlmittels misst, das dem Strömungsweg des Aktuatorgehäuses (2, 12) zugeführt wird.

13. Aktuator (1, 11) zur Montage an einer Spritzgießmaschine nach Anspruch 12, wobei ein Wert der Temperatur des Kühlmittels, der von dem Flüssigkeitstemperatursensor gemessen wird, mit einem Wert der Umgebungstemperatur, der von dem Umgebungstemperatursensor gemessen wird, verglichen wird, Entscheidung darüber getroffen wird, ob gemäß einem Ergebnis des Vergleichs das Kühlmittel, das durch den Strömungsweg des Aktuatorgehäuses (2, 12) geleitet wird, dazu veranlasst wird, zu dem Kühlweg oder dem Bypassweg zu strömen, und das Richtungsschaltventil (84) gesteuert wird.

## Revendications

1. Un actionneur (1, 11) pour un montage sur une machine de moulage par injection, l'actionneur (1, 11) comprenant :
un boîtier d'actionneur (2, 12) constituant un extérieur de l'actionneur (1, 11) et ayant une pluralité de surfaces externes (Se) et une pluralité d'éléments de trajectoire d'écoulement en forme de tuyau (51, 71) qui sont respectivement prévus sur les surfaces externes (Se) et ont chacun une trajectoire d'écoulement à travers laquelle s'écoule un réfrigérant,
dans lequel le boîtier d'actionneur (2, 12) a une partie évidée (7, 17, 37, 47) et/ou une saillie (27) pour les éléments de trajectoire d'écoulement en forme de tuyau (51, 71) prévus sur la surface externe (Se) du boîtier d'actionneur (2, 12), et
dans lequel la pluralité d'éléments de trajectoire d'écoulement en forme de tuyau (51, 71) sont interconnectés par une partie de raccordement de trajectoire d'écoulement (72).

2. L'actionneur (1, 11) pour un montage sur une machine de moulage par injection selon la revendication 1, dans lequel la partie évidée (7, 17, 37, 47) comprend une partie évidée (7, 17, 37, 47) évidée par rapport à la surface externe (Se).

3. L'actionneur (1, 11) pour un montage sur une machine de moulage par injection selon la revendication 2, dans lequel la partie évidée (7, 17, 37, 47) a une forme de rainure s'étendant sur la surface externe (Se).

4. L'actionneur (1, 11) pour un montage sur une machine de moulage par injection selon la revendication 2 ou 3, dans lequel la partie évidée (7, 17, 37, 47) a une forme dans laquelle l'élément de trajectoire d'écoulement en forme de tuyau (51, 71) peut être disposé à l'intérieur de la partie évidée (7, 17, 37, 47).

5. L'actionneur (1, 11) pour un montage sur une machine de moulage par injection selon l'une quelconque des revendications 1 à 4,
dans lequel la saillie (27) comprend une saillie (27) faisant saillie de la surface externe (Se), et
dans lequel une pluralité de saillies (27) sont capables de prendre en sandwich et de maintenir l'élément de trajectoire d'écoulement en forme de tuyau (51, 71) entre celles qui sont adjacentes dans une direction circonférentielle.

6. L'actionneur (1, 11) pour un montage sur une machine de moulage par injection selon l'une quelconque des revendications 1 à 5,
dans lequel la partie évidée (7, 17, 37, 47) comprend une partie évidée en forme de rainure (7, 17, 37, 47) évidée par rapport à la surface externe (Se) et s'étendant sur la surface externe (Se), et
dans lequel la partie évidée en forme de rainure (7, 17, 37, 47) et un élément de trajectoire d'écoulement en forme de couvercle (52) recouvrant la partie évidée (7, 17, 37, 47) et fixé à la surface externe (Se) constituent une trajectoire d'écoulement.

7. L'actionneur (1, 11) pour un montage sur une machine de moulage par injection selon l'une quelconque des revendications 1 à 6,
dans lequel l'actionneur (1, 11) est un moteur électrique ayant un rotor (3), un stator (4) disposé sur un côté périphérique externe du rotor (3) et un bâti de stator (5, 15) entourant le rotor (3) et le stator (4) et ayant une surface interne prévue avec le stator (4), et
dans lequel le boîtier d'actionneur (2, 12) a le bâti de stator (5, 15).

8. L'actionneur (1, 11) pour un montage sur une machine de moulage par injection selon la revendication 7, dans lequel la trajectoire d'écoulement s'étend pour sortir vers l'extérieur à partir de la surface externe (Se) dans une direction inclinée par rapport à ou perpendiculaire à une direction d'axe de rotation du rotor (3) sur une vue de face de la surface externe (Se).

9. L'actionneur (1, 11) pour un montage sur une machine de moulage par injection selon l'une quelconque des revendications 1 à 8, comprenant en outre :
un dispositif de refroidissement d'actionneur (81) amenant un réfrigérant à la trajectoire d'écoulement du boîtier d'actionneur (2, 12) et comprenant un mécanisme de suppression de condensation de rosée supprimant l'occurrence de la condensation de rosée dans l'actionneur (1, 11).

10. L'actionneur (1, 11) pour un montage sur une machine de moulage par injection selon la revendication 9,
dans lequel le dispositif de refroidissement d'actionneur (81) comprend en outre un passage de circulation (82) ramenant le réfrigérant qui est passé par la trajectoire d'écoulement du boîtier d'actionneur (2, 12) à la trajectoire d'écoulement, et
un échangeur de chaleur (83) prévu dans un centre du passage de circulation (82) et refroidissant le réfrigérant, et
dans lequel le passage de circulation (82) a une trajectoire de refroidissement permettant au réfrigérant de s'écouler à travers l'échangeur de chaleur (83), une trajectoire de dérivation permettant au réfrigérant de s'écouler sans s'écouler par l'échangeur de chaleur (83), et une soupape de commutation de direction (84) prévue au niveau d'un point de bifurcation entre la trajectoire de refroidissement et la trajectoire de dérivation, sur un côté en amont par rapport à l'échangeur de chaleur (83).

11. L'actionneur (1, 11) pour un montage sur une machine de moulage par injection selon la revendication 10, dans lequel le passage de circulation (82) a en outre, au milieu du passage de circulation (82), un réservoir de réserve (85) prévu sur un côté en aval par rapport à l'échangeur de chaleur (83) et une pompe d'alimentation en réfrigérant distribuant le réfrigérant à la trajectoire d'écoulement du boîtier d'actionneur (2, 12), sur un côté en aval par rapport au réservoir de réserve (85).

12. L'actionneur (1, 11) pour un montage sur une machine de moulage par injection selon la revendication 10 ou 11,
dans lequel le dispositif de refroidissement d'actionneur (81) comprend en outre un capteur de température ambiante mesurant une température ambiante, et
un capteur de température de liquide mesurant une température d'un réfrigérant amené à la trajectoire d'écoulement du boîtier d'actionneur (2, 12).

13. L'actionneur (1, 11) pour un montage sur une machine de moulage par injection selon la revendication 12, dans lequel une valeur de la température du réfrigérant mesurée par le capteur de température de liquide est comparée à une valeur de la température ambiante mesurée par le capteur de température ambiante, on détermine s'il y a lieu de faire passer le réfrigérant dans la trajectoire d'écoulement du boîtier d'actionneur (2, 12) pour qu'il s'écoule dans la trajectoire de refroidissement ou la trajectoire de dérivation selon un résultat de la comparaison, et la soupape de commutation de direction (84) est commandée.
